# EUROPEAN PATENT APPLICATION

(11) **EP 3 591 599 A1**
(43) Date of publication of application: **08.01.2020**
(21) Application number: 18000575.3
(22) Date of filing: 04.07.2018
(51) Int. Cl.: G06Q 20/02, G06Q 20/14, G06Q 20/20, G06Q 20/32

(54) **METHOD FOR EFFECTING A PAYMENT TRANSACTION TO AN ACTUAL STORE FROM ANY LOCATION**

(71) Applicant: Momentum Booking SRL, Oradea, Bihor County (RO)
(72) Inventor: BOGDAN, Daniela-Claudia, Oradea, Bihor Country (RO); GOGA, Vlad-Cristian, Cluj-Napoca, Cluj Country (RO)

(57) **Abstract**

Provided is a method for effecting a payment transaction. The method comprises in online (using internet) communication between a fixed or mobile terminal of a customer and a fixed or mobile terminal of a store with the capability to execute the due payment from an application accesed by customers's terminal, from any location, followed by instant automatic report to the store's terminal and clearence of due payment at the cash register of the store.

## Description

### Field of the Invention

The present disclosure relates to a method for effecting a payment transaction from a terminal (fixed or mobile) to a fixed or mobile terminal of an actual / virtual store, regardless of the two terminals physical locations, using internet communication and a payment processing service / server, followed by instant aknowledgment of the store terminal for payment clearance.

More particularly, but not exlusivlely, it relates to a method for effecting a payment transaction from payer's terminal to the store terminal:
∘ When the payer is also the customer - from the terminal of the payer, for self;
∘ When the payer pays for a customer - from the terminal of the payer, but for a third party which is the customer (family member / friend / employee / service provider / etc.);

Definitions: **customer** - the payment transaction party which launches the purchase request; **payer** - the payment transaction party which executes the payment for the purchase request launched by the customer; **POP** - point-of-purchase of a store representing the functional complex comprising of cash register, electronic devices for scaning / registering items to be purchased, payment electronic terminals (credit card readers connected to a payment processing server), other peripheral devices, employees, etc ; **POP terminal** - point-of-purchase terminal representing the electronic device which registers products to be purchased and prepares the invoice to be payed ; **store** - virtual or actual store which can have several POP terminals; **card** - bank card, credit card, debit card.

### Description of Prior Art

The use of electronic devices for making payments at point-of-purchase terminals and over the Internet has increased significantly in the last period. Point-of-purchase (POP) terminals use Near Field Communication methods (NFC), bluetooth methods, and bar/QR code scanner methods. Electronic devices of a payer can be used in conjunction with these terminals to enable the user of the electronic device to make a payment for the purchase, but only if the device is phisically present near the POP terminal or near de QR / barcode to be scanned.

The task of paying for items at a store is time consuming, has many limitations and several security risks also.

**As a customer**, having to pay for items in an **actual store**, needs a certain amount of attention and time for :
∘ entering the store;
∘ having the wallet with own bank cards (paying with another person's card is generally considered illegal);
∘ or having the mobile phone for near field communication methods of payment;
∘ waiting in line;
∘ using / touching the POS terminal;
∘ introducing PIN number for payment authorization (where necessary);
∘ waiting for reciept or invoice, etc.

Due to steps described, more limitations may occur :
∘ if one doesn't have the cards or wallet or mobile phone;
∘ cards or wallet or mobile phone are lost;
∘ customer can be targeted by social hackers for card PIN number or wallet scan for wireless cards;
∘ important printed reciepts can be lost, etc;
∘ stores are limiting the sales value (marginal values but of equall importance) due to payment methods lack of flexibility;

**As an actual store**, having to use a fixed register for collecting payments, require:
∘ dedicated employees trained for using the cash register and POS and other connex devices;
∘ necessary items like reciept paper rolls, ink (where necessary), UPS systems for backing up electric failure, reliable internet connection for POS units, technical maintenance of several electronic devices (cash register, barcode scanner, POS, reciept printer, etc);
∘ time needed for collecting a payment at the cashdesk, generating inconveniences for customers;

Thereby, each actual store needs en entire functional complex in order to organize its payment collection point.

As a customer, having to pay for items in a **virtual** / **online store** needs also attention, time and not least assuming signifiant security risks:
∘ having to insert or to sign up for an account containing confidential information including card details;
∘ having to disclose card information to different e-payment servers / services imposed by the online store, for each purchase, whithout any guarantee, information or terms provided to the payer about security levels used by the payment processor.

This state of art enables frequent cases of saving customer's confidential data on unsecure servers or even share this information by online stores with other entities.

In all present cases, the e-payment processing service is contracted by the online store as a facility in benefit of the customers.

The customer (payer) represents the payment transaction party which exposes confidential data to payment processing servers for each payment order, therefore the customer (payer) must be the party to have the contract with the payment processing service in order to be protected and informed of risk levels assumed, **and not the online store.**

In actual stores, it is not technically possible to make payments from a distance (another location) with instant POP aknowledgment for payment clearence.

In any type of store, actual or virtual, card payments cannot be made, without violating the law and / or card network rules, by using another one's card.

In any type of store, actual or virtual, it is not technically possible to make card payments in a third party's name (purchase made for other).

In any type of store, actual or virtual, it is not technically possible for a third party to pay for your purchase from a distance.

In any type of store, actual or virtual, it is not technically possible for the representative of a customer, to make the payment in his name from distance.

There is therefore a need for a new method of effecting a payment transaction which addresses at least some of the highlighted disadvantages of the prior art.

### Summary of the Invention

Present invention provides a computer-implemented method of effecting a payment transaction, comprising:
∘ One time introducing and saving of customer's / payer's information needed for executing a payment by the payment processing server, in customer's / payer's application;
∘ Manual or automatic selecting one specific point-of-purchase (POP) terminal of a merchant / store, in customer's / payer's application;
∘ Online interogating (using internet, from any location) the selected POP terminal for the invoice details and the total amount to be payed (active final value) registered at specific POP terminal, by customer's / payer's application, after completion of scanning / registering etc. of purchased items at the POP terminal;
∘ Generating short payment request data for the payment processing server, by the customer / payer application, comprising already saved data of the payer and POP interogation data: corresponding total value to be paid, store and POP terminal identifiers
∘ Generating a detailed payment request data for one third party asked to become a payer in the payment transaction, by the customer application to third party's same application, comprising detailed invoice data, partial or total amounts asked to be paid, store and POP terminal identifiers;
∘ Sending the detailed payment request data from the customer application to the third party same application through internet connection;
∘ Sending the short payment request data from the customer / payer (third party) application to a payment processing server through internet connection
∘ Executing a payment transaction by the payment processing server, from a customer / payer (third party) account to the store account in response of the payment request;
∘ Forwarding notification data to the customer / payer application indicating the status of the payment transaction from the payment server;
∘ Forwarding notification data, from the payment processing server (directly or through customer application) to the store's POP terminal indicating the status of the payment transaction for POP payment clearence and issuing the bill,;
∘ Issuing the correspondent invoice and bill in electronic format and sending from store's server to payer' and / or customer's e-mail address;

In accordance with some embodiments, a method is performed at an electronic device with a display (laptop, desktop, mobile phone, tablet, POS devices, etc), with connection to the internet, and with displaying a user interface for an application.

The user interface includes the automatic localisation of the mobile device in order to identify the store and afterward provides the list of points-of-purchase of that store for customer manual selection, in order to identify the exact POP terminal to interogate.

The method includes displaying the complete lists of (partner) stores with sub-lists containing each POP terminal of each store, in order to identify and select the exact POP terminal to interogate from a distance (in the case no mobile device is present in store location).

The method includes internet communication for the application, store's POP terminal, payment processing server, in order to:
∘ interogate the identified POP terminal of the store for invoice registered details and / or total amount to be payed;
∘ receive invoice data from POP terminal of the store (through store servers, etc);
∘ send the payment request, by customer or by third party using the application, to the payment processor;
∘ receive, by application and/or POP terminal of the store, the status of the payment request from the payment processor;

The method includes detecting selection of the payment card and/or other resource (third party) to be used.

The method also includes, in response to detecting selection of the payment card or external resource (request to a third party), o-nline transferring transaction information about the payment transaction from the application to the payment processor or to the application of a third party (asked to pay) in order to be on-line re-transmitted to the payment processor.

The method includes authorizing a payment transaction for purchased items using a payment account linked to the application. Payment transaction can be authorized only by payer, because not in all cases the customer is the payer also.

The method includes on-line receiving by the application and by the store's POP terminal, reports about the payment status from payment processor, in order to clear the active value to be paid on the POP / cashdesk.

The method includes generating data of the executed payment with specific details about the customer, payer, store, etc, for a clear traceability of financial auditable opperations. Paying a purchased item with another person's card can be cleared out by using the method, payer beeing the only one to use own card.

Also it contains generating electronic invoices and reciepts to be automatically sent by e-mail, at the e-mail adresses linked to the application.

### Brief description of the drawings

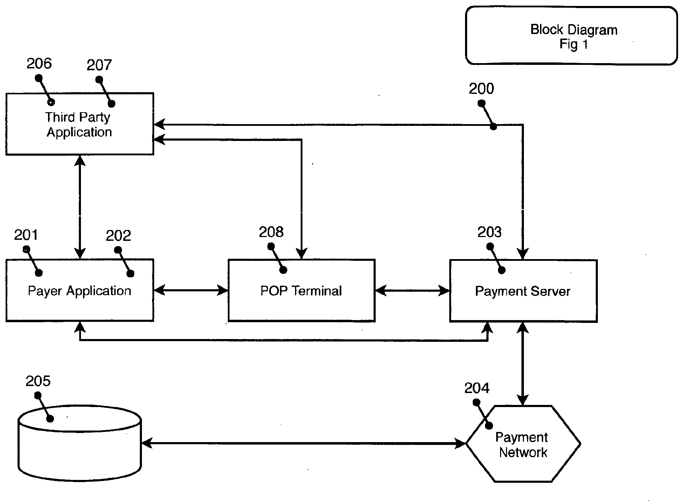

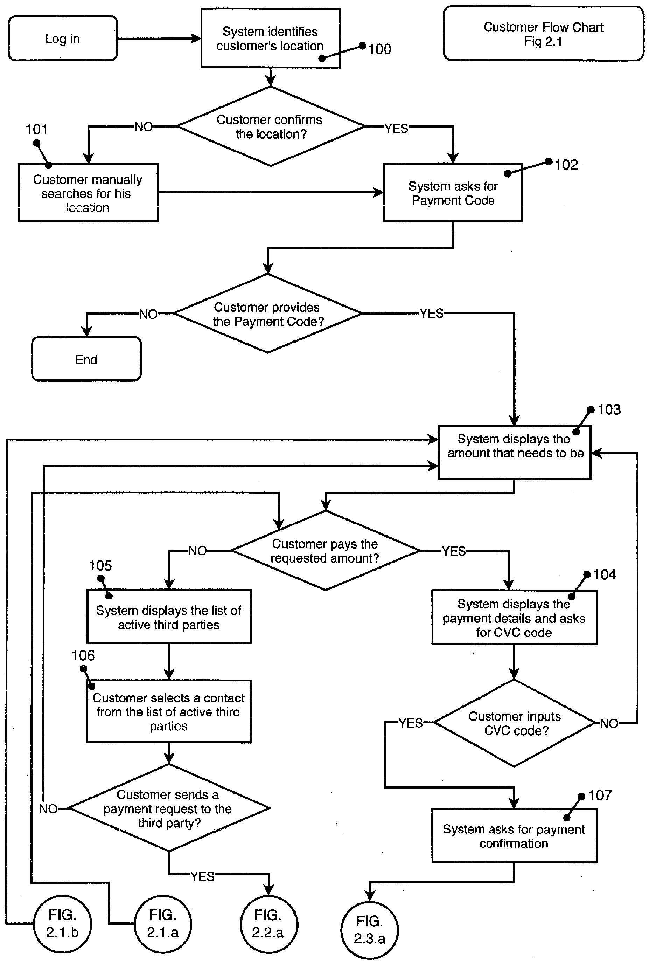

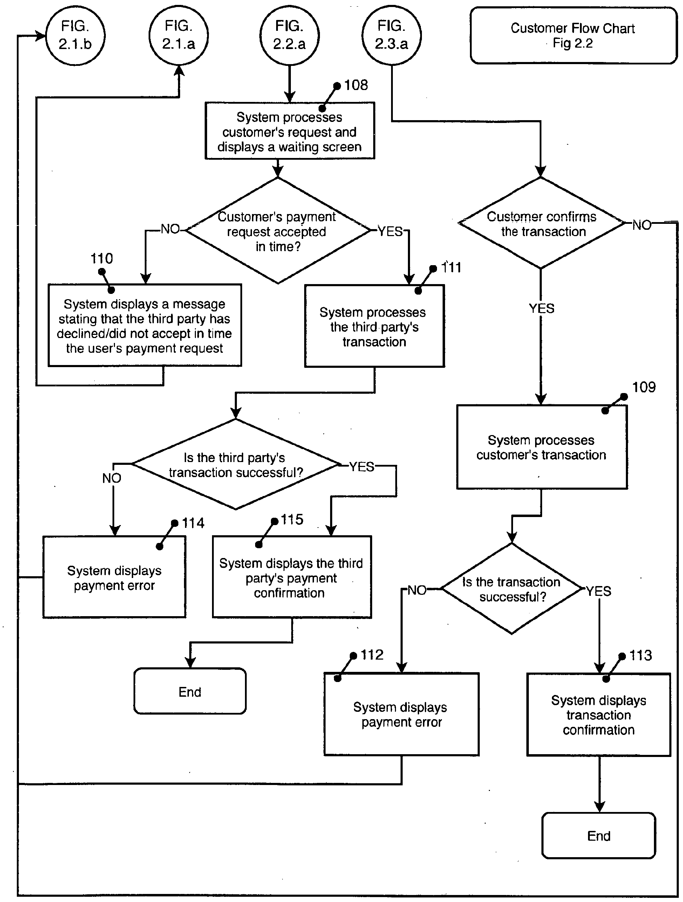

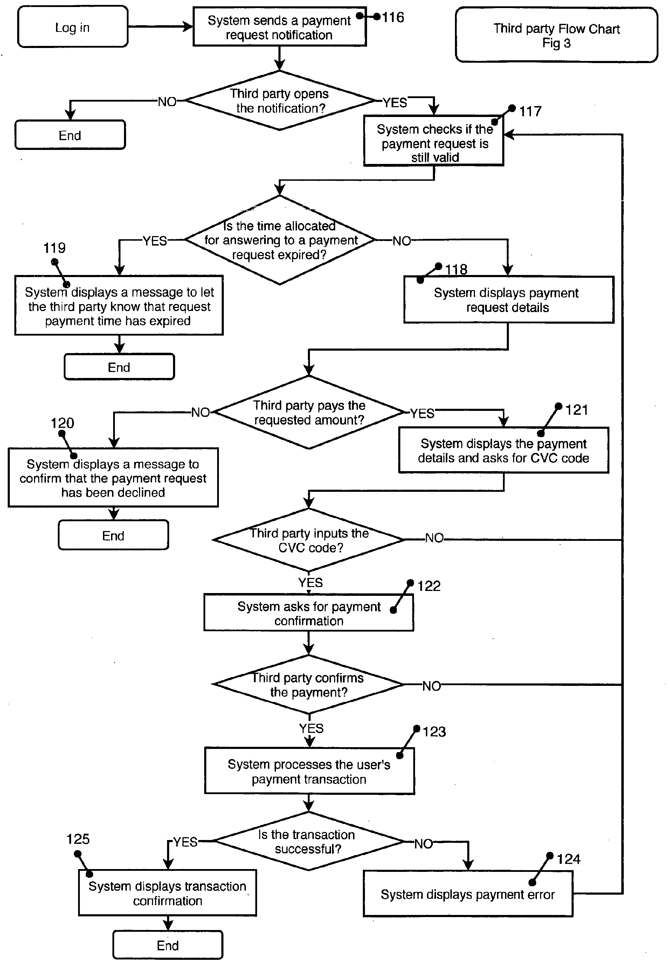

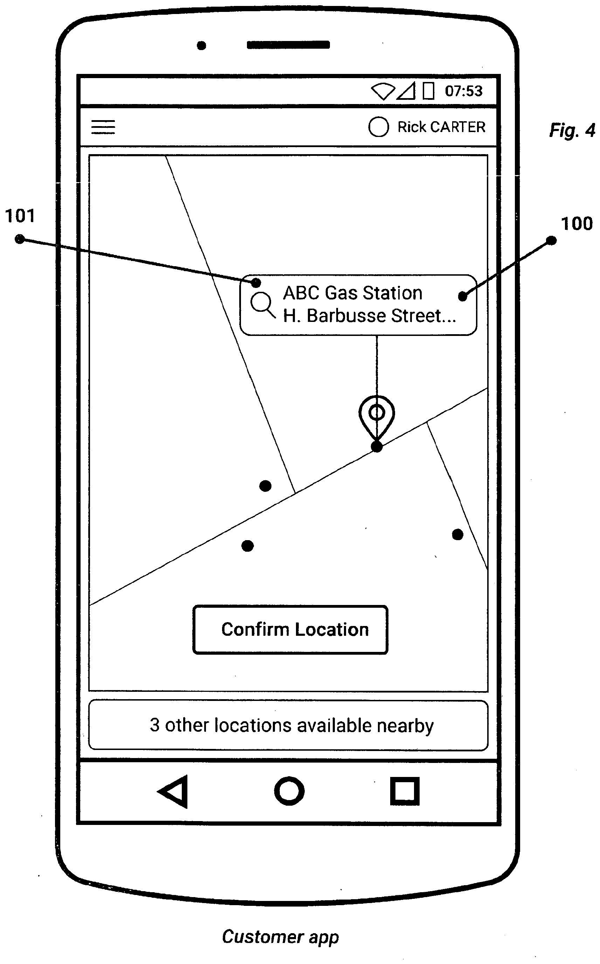

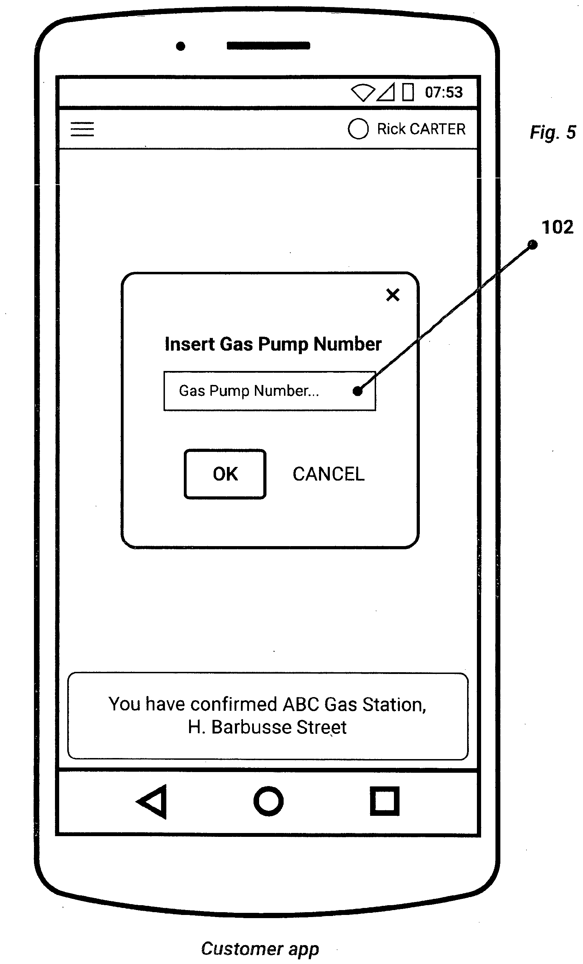

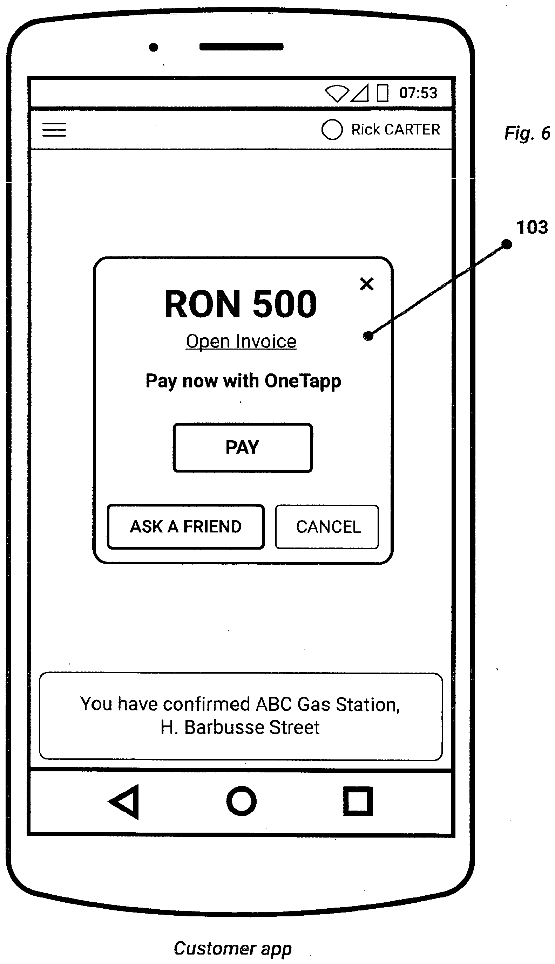

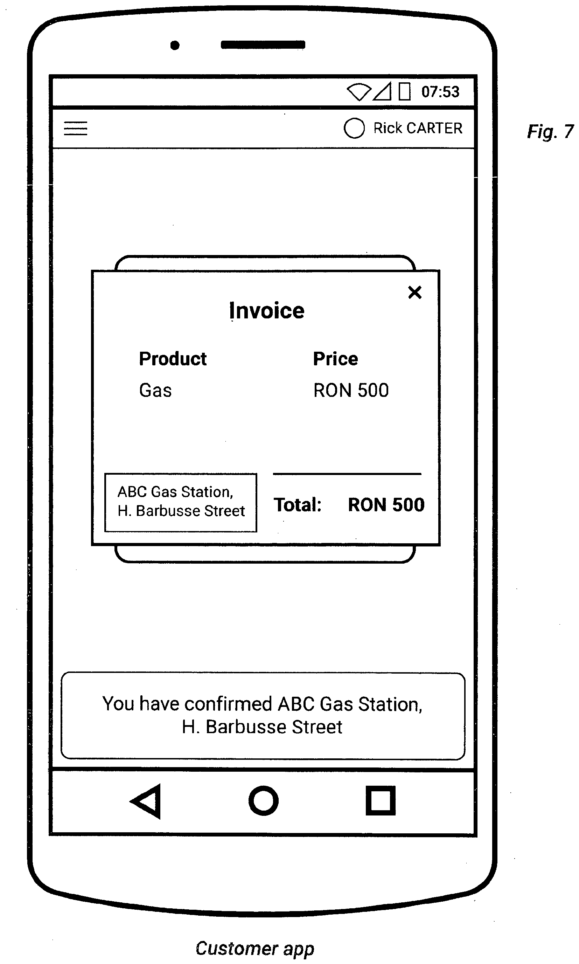

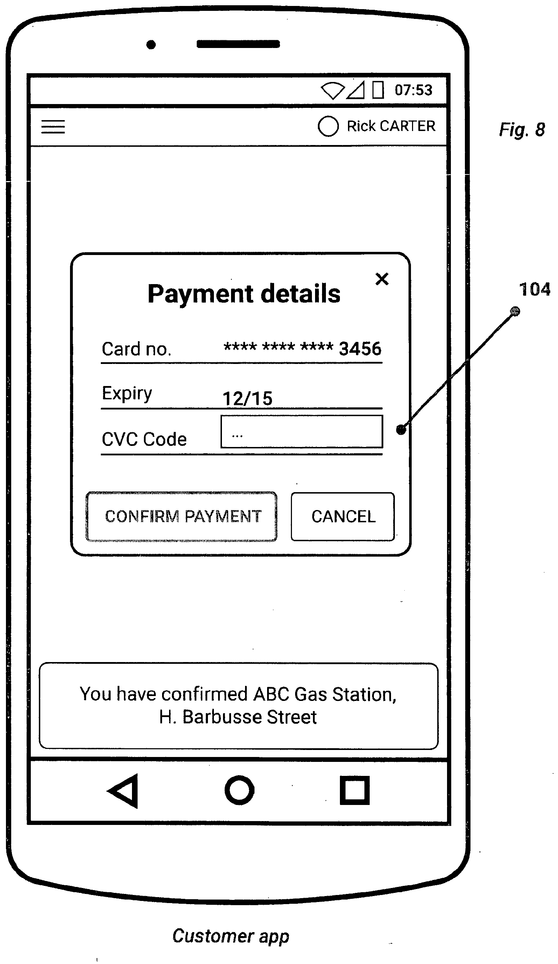

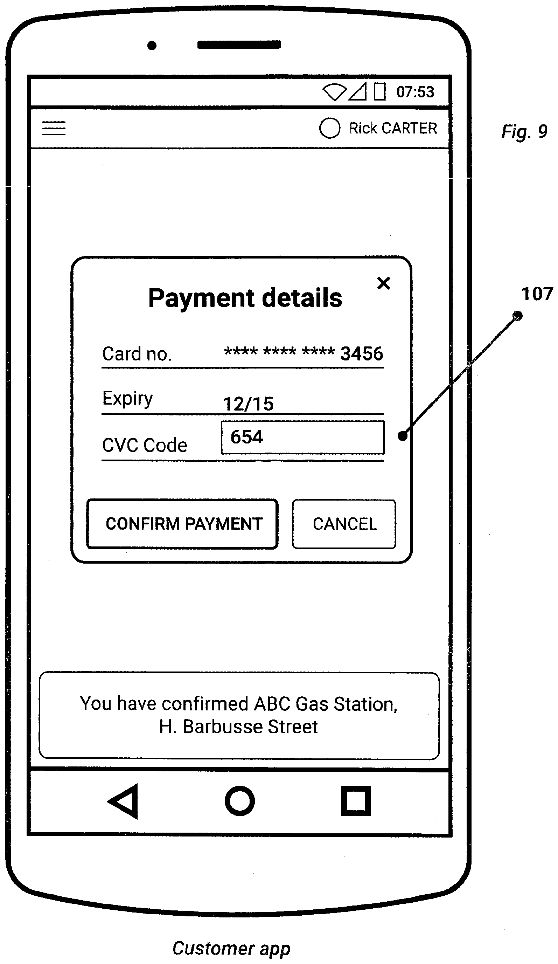

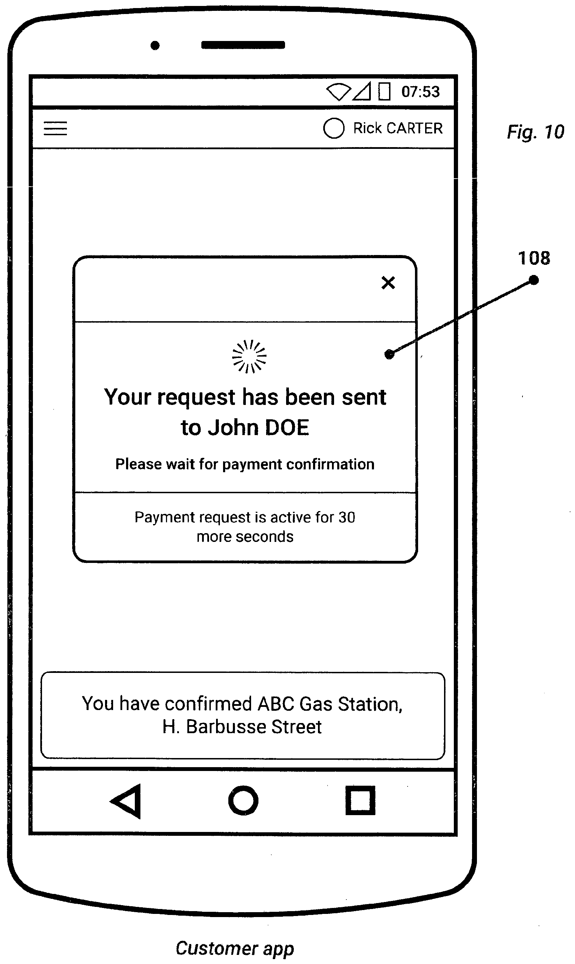

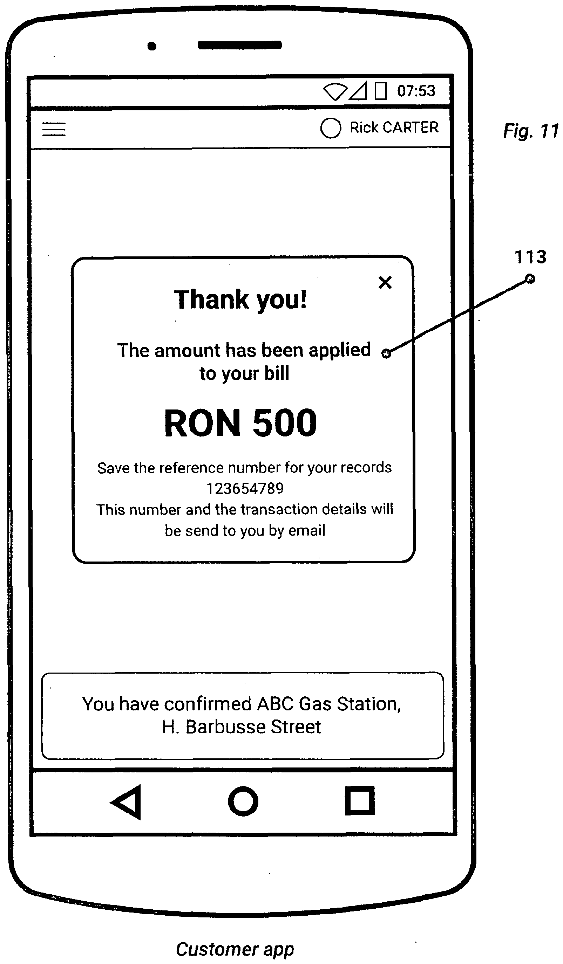

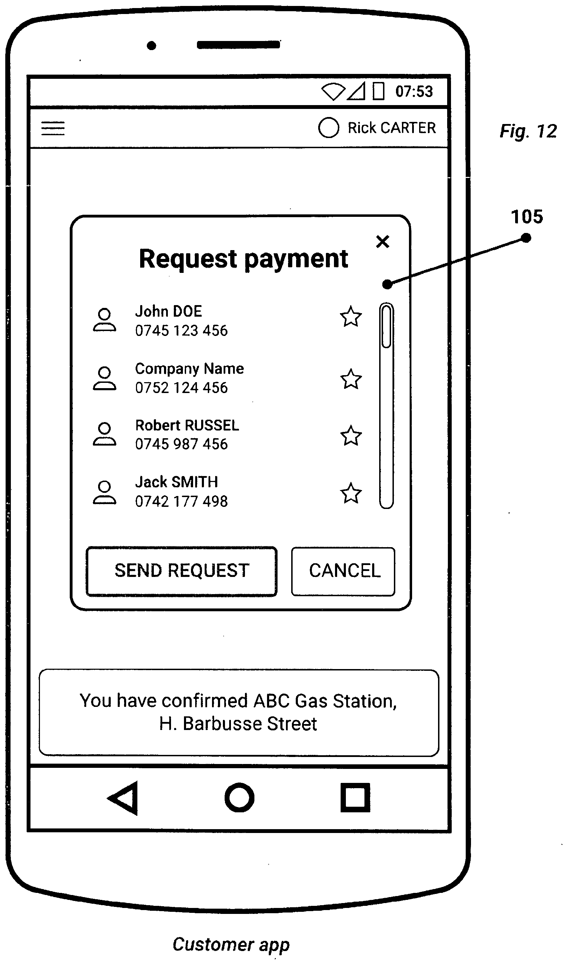

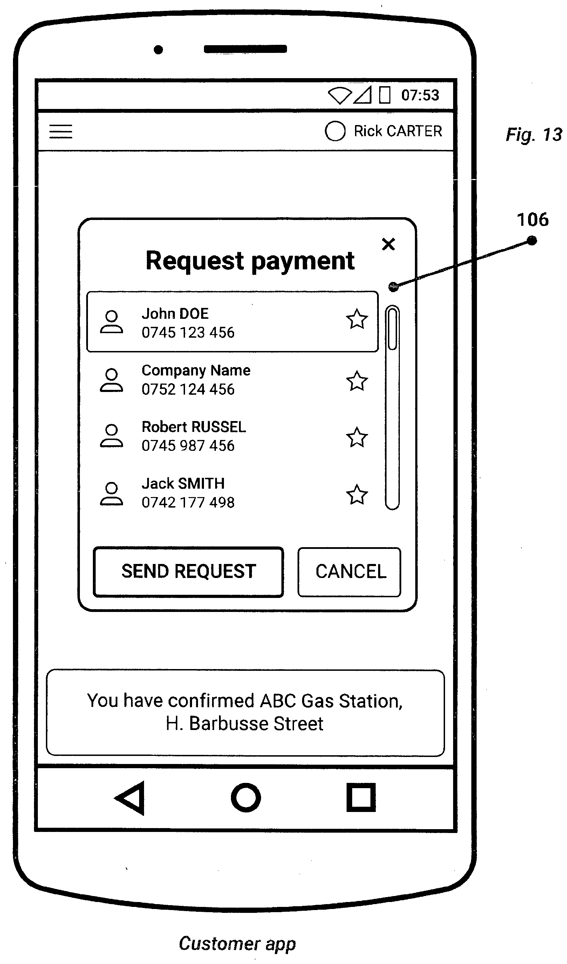

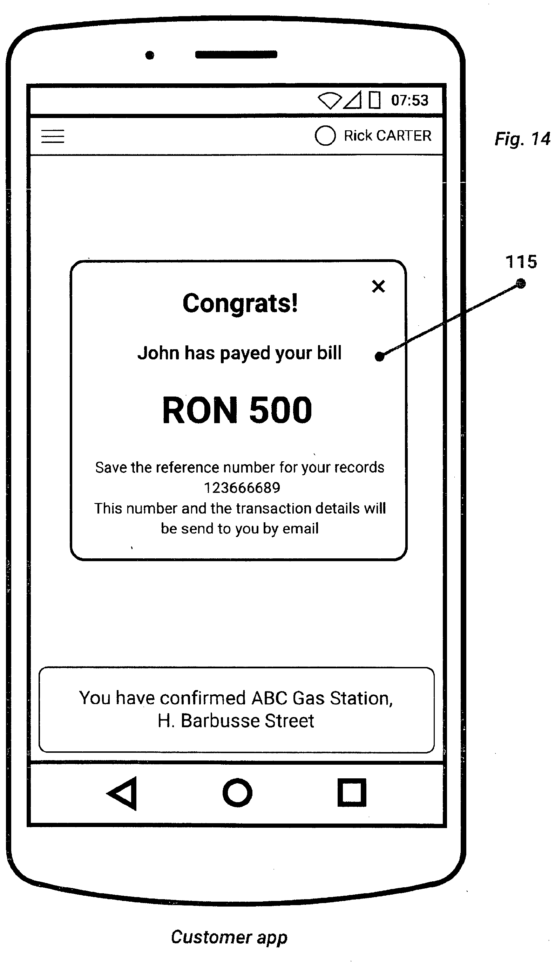

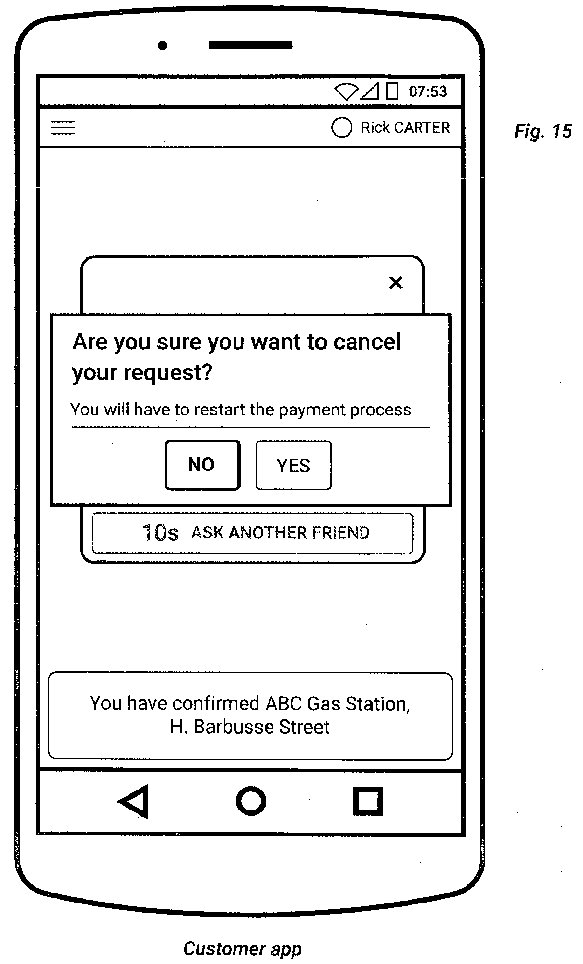

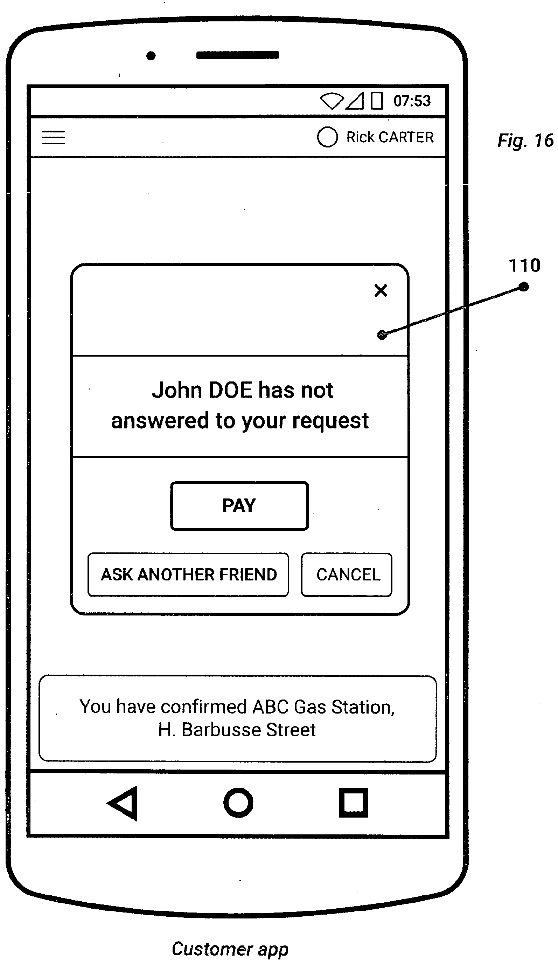

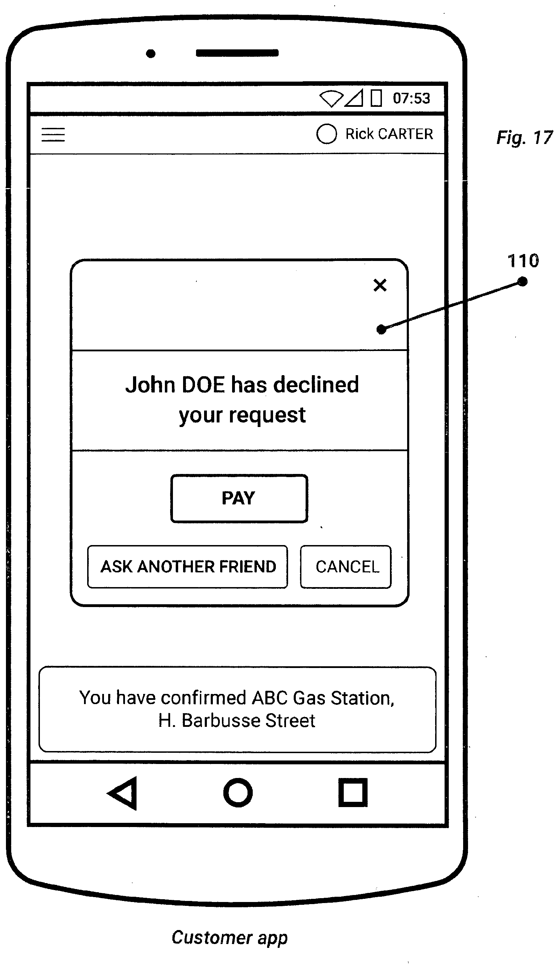

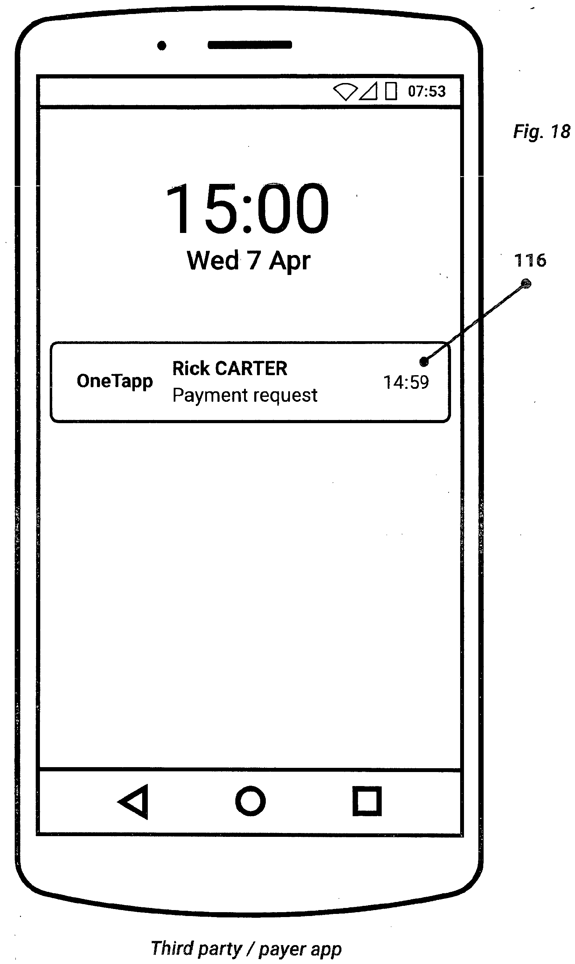

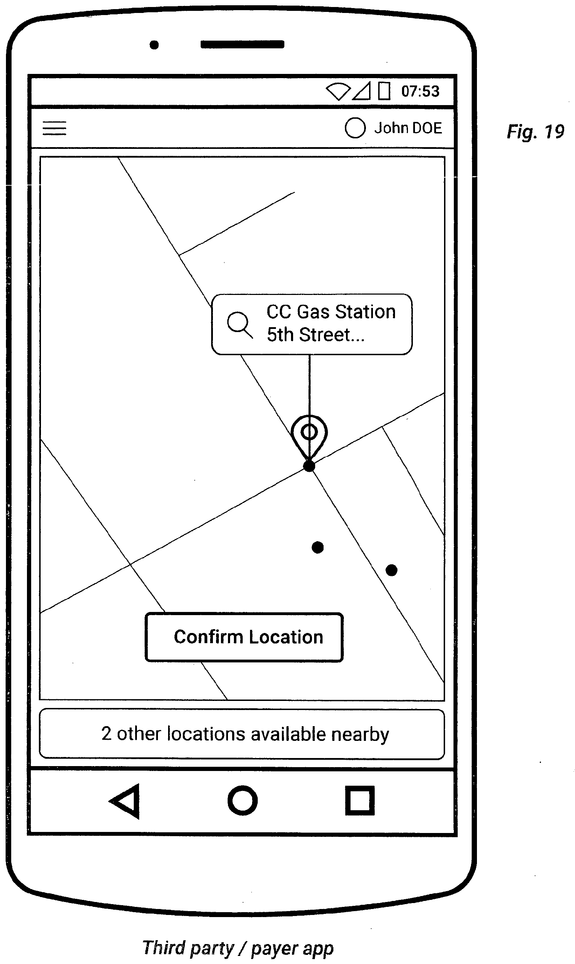

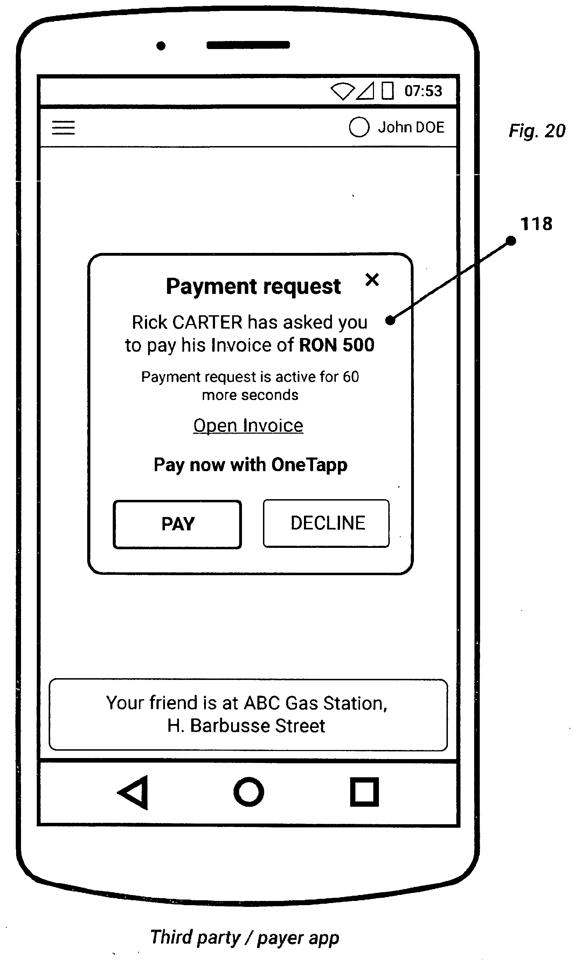

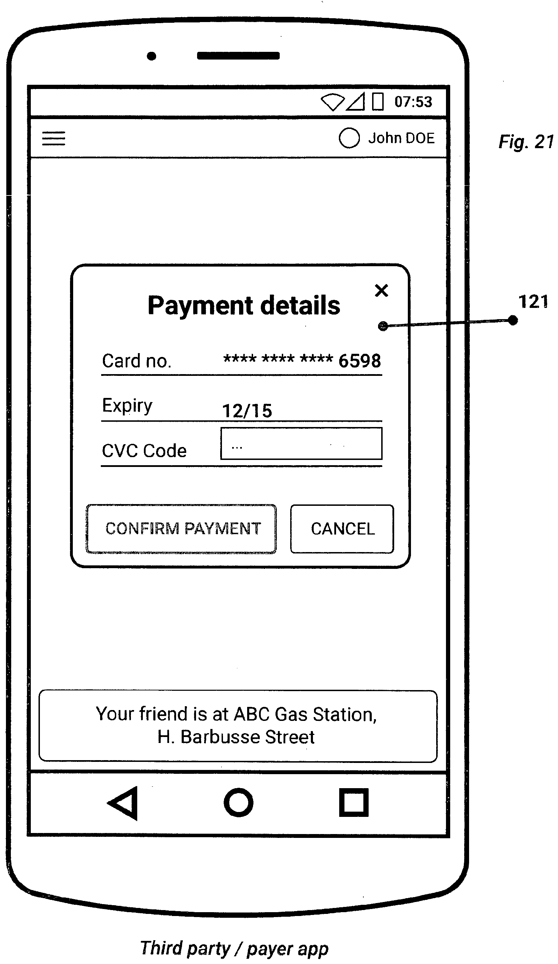

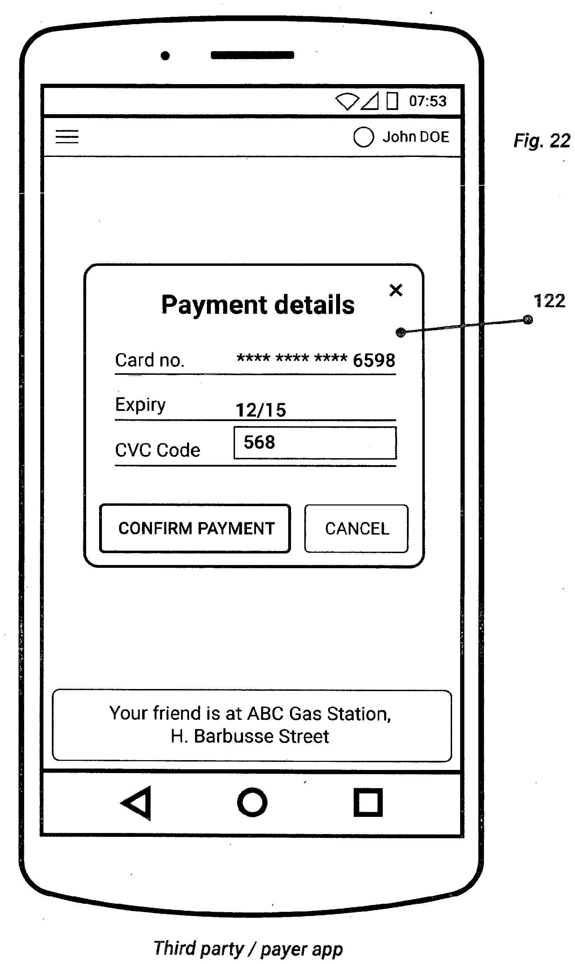

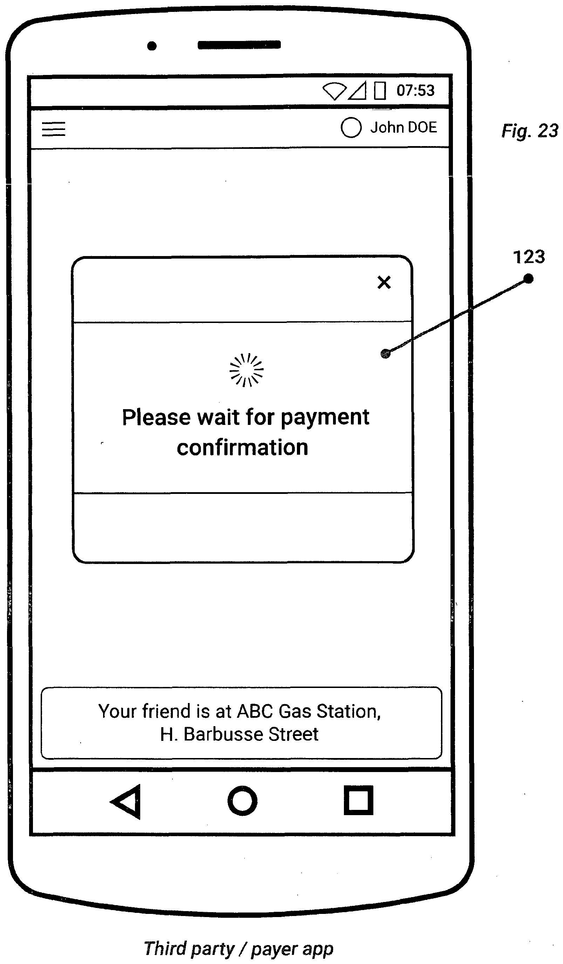

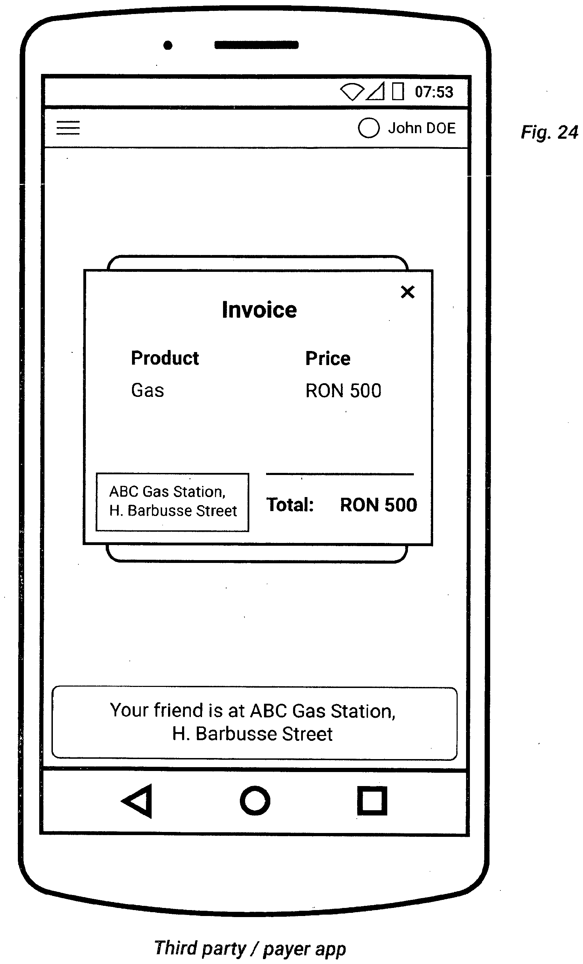

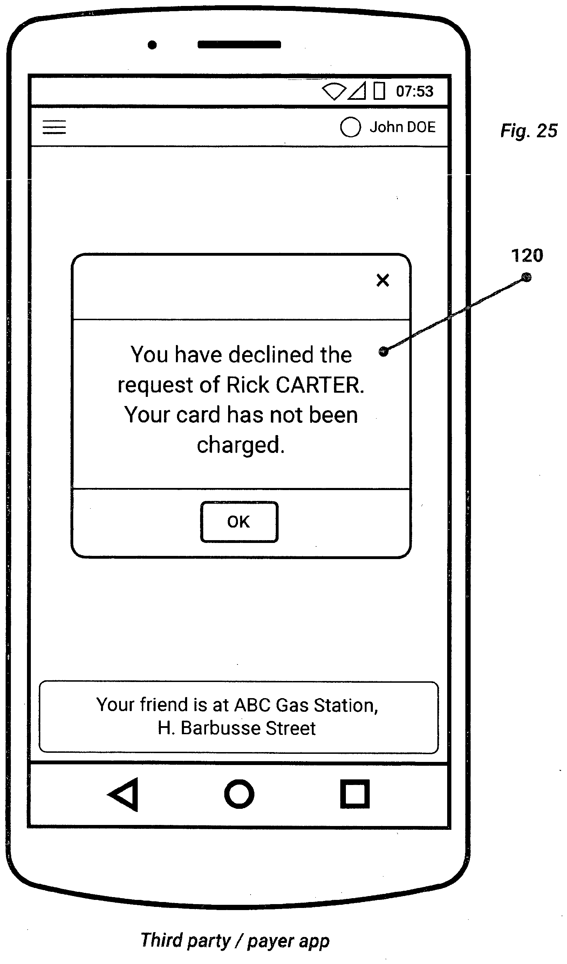

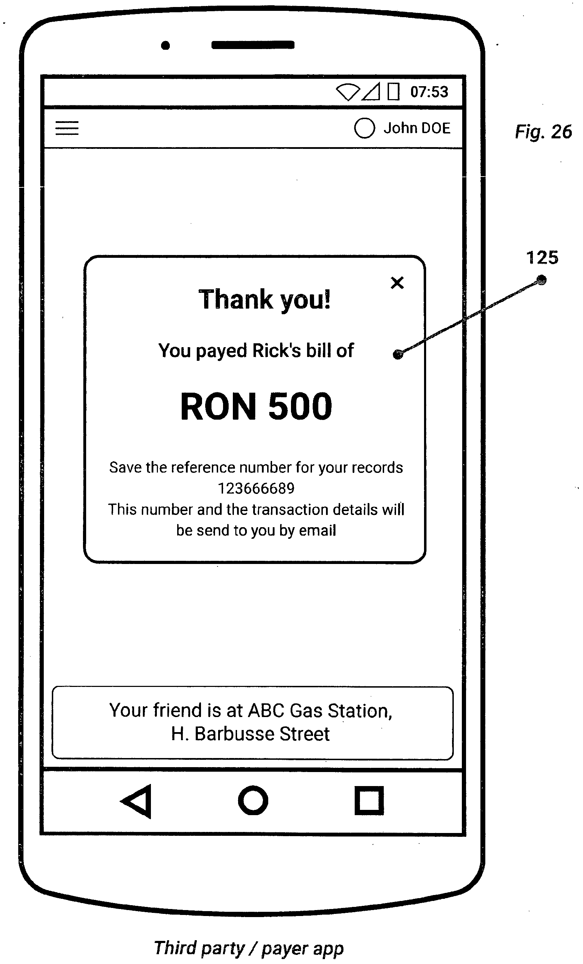

Embodiments of the present invention will now be described, by way of example only, with reference to the accompanying drawings, in which:
∘ Fig. 1 is a block diagram of the method (200), comprising customer application (201), customer device (202), payment server (203), payment network (204), database (205), third party application (206), third party device (207), point-of-purchase terminal of a store (208).
∘ Fig. 2 (2.1, 2.2) is a flowchart illustrating the operations of the computer-implemented method for executing a payment - **customer flow** - according to an exemplary embodiment of the present invention.
∘ Fig. 3 is a flowchart illustrating the operations of the computer-implemented method for executing a payment - **third party flow** - according to an exemplary embodiment of the present invention.
∘ Fig. 4 to Fig. 17 represent subsequent wireframes of the customer application, numbered accordingly to the correspondent flowchart.
∘ Fig. 18 to Fig. 26 represent subsequent wireframes of the third party application, numbered accordingly to the correspondent flowchart.
∘ Drawings contain numbered components, each number beeing singular, used exclusively for the designed item described.

### Detailed description of the invention

Hardware and software are continously improved on a daily basis. Considering the level of present development, the payment process has to become significantly more flexible and easy to execute. Such methods, as the one provided in present disclosure, complement or replace conventional methods for making payments. Such methods and interfaces reduce the cognitive burden on a user, reduce the time needed for the process, exempt the limitations imposed by space and presence in a certain location and generates a more efficient human-machine interface, with benefits to all users, customers / payers and stores.

The following description sets forth exemplary methods, and the like. It should be understood that such description is not intended as a limitation on the scope of the present disclosure but is instead provided as a description of exemplary embodiments.

Modules or elements that are described with reference to any Figure may be interchanged with those of other Figures or other equivalent elements without departing from the spirit of the present teaching.

The terminology used herein is for the purpose of describing particular embodiments only and is not intended to be limiting. As used herein, the singular forms "a", "an," and "the" are intended to include the plural forms as well. It will be understood that used expressions / terms like "comprises / comprising / includes / including" and similar, specify the presence of one / more stated components, but do not exclude the presence or addition of one / more other components and/or groups of components.

Referring to the drawings, an exemplary method for processing a payment transaction is illustrated. The method facilitates payment for purchased items using an on-line platform thereby removing the need for the customer to be in a certain location and make the payment on a point-of-purchase terminal or at any device / barcode / etc located in or near the POP terminal of a store.

The method comprises a payer application (201) which is accessible via one/more computing devices (202), a store POP terminal (208) and one on-line payment processing server (203). The computing device (202) may be a smart phone, a tablet, a laptop or desktop or any other suitable device, with internet connection. POP terminal (208) may be any electronical device with software, suitable for registrating the purchased items in a store, connected to the internet directly or through one server.

In the exemplary embodiment the payment transaction is described with reference to paying for fuel at a filling station wihtout entering the store. However, it is not intended to limit the present teaching to a particular type of payment transaction.

The customer logs into the application (201) and automatic location starts (100), pointig the located store the customer is nearest, out of application database of affiliated stores. Application also sets out a list of nearby stores in the located area, to be manually selected by customer on map or list, in case of location error (101). Once the store is confirmed, apllication asks customer for payment code comprising the number of the POP terminal of the store (fuel pump number in this case, table number if at a restaurant, etc). After customer confirms the store and the POP number, all idetifiers of that store and POP terminal are extracted from application database which generates and sends the invoice request to the store's server or directly to POP terminal (208). The customer / payer application is communicating with store's POP terminal through online connection, using specific interogation software which allows a user to recieve the invoice details, set and active on a certain POP of the store (103), in user's application. The interogation of the POP terminal requires only store and POP identification, in order for the application to communicate with the POP terminal through on-line connection. Using the application, the customer has no need to enter the gas station, wait in line, pay at the POP terminal, receive and keep the reciept, etc. Using the application, customer has one only task to identify the fuel pump number for recieving the invoice and execute the payment.

The case presented above is set out for a customer which is also the payer. Parenthetically, the exemplary embodiment inherently illustrates the case in which the customer is not the payer and does not need any application to execute the payment, once the payer from any location with internet connection, can manually select inside the application the POP terminal at which customer has the active invoice registered, receive the invoice and execute the payment followed by POP terminal instant payment cleareance. Payer can obtain all the information about the POP terminal from the customer, ex: by phonecall, text message, etc.

Returning to principal method flow, once the customer / payer application recieves all invoice details from POP terminal, it is enabled to display this information to the customer / payer (103) and execute the corresponding payment through the on-line payment server integrated within the application. The payment can be requested and executed by customer's / payer's application (104, 107, 109).

Once the payment is authorised by the on-line payment server (109, 113 /111, 115), the application (201) and / or the POP terminal (208) are instantly notified by payment server (203) about the status of the payment, in order for POP terminal to have payment cleareance and customer to have payment confirmation (113).

Application is enabled, if customer decides, to ask for a third party (206) using the same application to pay the invoice. Third party can be a company, a friend, a family member, or any listed contact that uses the application (105, 106). At this point, application sends the payment request to a third party (108) along with all extracted information about the store identifiers and invoice details.

Once the thir party's payment is authorised by the on-line payment processor (111), the application and / or the POP terminal are instantly notified by payment server abut the status of the payment (115), in order for POP terminal to have payment cleareance and customer to have payment confirmation.

General description of exemplary embodiment: after fuel filling, once the total amount to be payed becomes final and hence active on the POP terminal of the filling station, the customer logs into the application (201). Application automatically locates the customer's terminal and determins the fuel station name and address, asking for customer to confirm. If application returns an erroneous location, customer can navigate the map for manually selection of the correct fuel station. Once the fuel station name and address are set, application asks user to insert the fuel pump number (POP terminal number). Once the application has all previously mentioned information, it extracts the specific identifiers of the POP terminal from a database and requests the invoice details, through online interogation, from POP terminal / store's server. After interogation, application returns detailed invoice and total amount to be payed, asking for customer's action to proceed with payment. Customer can opt for paying using own card (previously registered into the application) or for asking a third party using the same application, to pay the invoice. If customer opts for paying using own card, he can execute the payment through an online payment server / service, integrated within the application. After payment server / service executes the requested payment, the application and / or the POP terminal are notified about the payment status, and POP terminal can clear active invoice and proceed to next client. If the customer opts for asking a third party to pay the invoice, he can send his request through the application by selecting one of listed third parties (contacts using the same application) or if the customer does not have the application he can call / send a text message to a third party (user of the application) asking to pay the active invoice on gas pump number "a" at gas station "b". Third party can accept the payment request received through application and execute it by application, with automatic and instant notification of the POP terminal. If the payment request is received in another way (text message, phonecall, etc), thrid party can open the application, manually search for the gas station, insert the gas pump number and pay the active invoice amount returned by the application, with automatic and instant notification of the POP terminal for clearance.

Other aspects: The payment server may also present payment options that the user can use by utilising a digital wallet. The payment server executes payment and notifies the merchant account that payment has occured. It will be appreciated that the method includes one or more software modules which are programmed to implement predefined functions. It will be appreciated that the application computer program code or instructions for carrying out operations for aspects methods disclosed herein may be written in any combination of one or more programming languages. It will be appreciated that the method may be implemented using cloud or local server. In this way it will be understood that the present teaching is to be limited only insofar as is deemed necessary in the light of the appended claims.

It should be emphasized that the described embodiments are possible examples of implementations, merely set forth for a clear understanding of the principles. Variations and modifications may be made to the described embodiment(s) without substantially departing from the spirit and principles of the present teaching. All such modifications are intended to be included herein within the scope of this disclosure and the present invention and protected by the following claims. For example, steps associated with the processes described herein can be performed in any order, unless otherwise specified or dictated by the steps themselves. The present disclosure is intended to embrace all such alternatives, modifications and variances that fall within the scope of the appended claims.

## Claims

1. A computer implemented method of effecting a payment, with no conditions regarding locations of the terminals (customer terminal, payer terminal, point-of-purchase terminal), using internet communication between terminals involved in order to identify all payment information needed (price, store identifiers, etc) and execute the payment of an invoice to a point-of-purchase of a store, comprising:
∘ One time introducing and saving of customer's / payer's information needed for executing any payment by the payment processing server, in customer's / payer's application;
∘ Automatic or manual selecting of one specific point-of-purchase (POP) of a merchant / store, in customer's / payer's application;
∘ Automatic online interogating (from any location, over the internet) the selected POP terminal for the invoice details and the total amount to be payed (active final value), by customer's / payer's application;
∘ Generating short payment request data for the payment processing server, by the customer / payer application, comprising already saved data of the payer and POP interogation data: corresponding total value to be paid, merchant and POP identifiers OR Generating a detailed payment request data for one third party asked to become a payer in the payment transaction, by the customer application to third party's application, comprising detailed invoce data, partial or total amounts asked to be paid, merchant and POP identifiers;
∘ Sending the detailed payment request data from customer's application to payer's same application through internet connection;
∘ Sending the short payment request data from the customer / payer (third party) application to a payment processing server through internet connection;
∘ Executing a payment transaction by the payment processing server, from a customer / payer (third party) account to the merchant account in response of the payment request;
∘ Forwarding notification data to the customer / payer application indicating the status of the payment transaction from the payment server;
∘ Forwarding notification data to the merchant's POP terminal, directly or through customer application, indicating the status of the payment transaction in scope of POP payment clearence;
∘ Issuing the purchase correspondent invoice and bill in electronic format and sending them from store's server/POP to payer' and / or customer's e-mail address;

2. A separate method or a method of claim 1, wherein the store and POP terminal identifiers, are automaticaly extracted by customer's application over the internet, (from any location of customer's terminal / with no need for physical presence of customer's terminal inside or near the store or POP terminal of the store) from an online database, needing only basic / accesible information like store name, adress and POP terminal number.

3. A separate method or a method of any precedent claim(s), wherein the detailed invoice registered and active at one identified POP terminal of a store is recieved in full (total and breakdown prices) by customer's / payer's application only through online interogation of POP terminal, without the need for physical presence of customer's / payer's terminal inside or near the store (for near field communication, barcode / QR code scanning, etc).

4. A separate method or a method of any precedent claim(s), wherein the active invoice registered at a POP terminal of a store is payed by customer's application from any location of customer's terminal, through online means, with automatic, instant, online notification of POP terminal for payment clearance.

5. A separate method or a method of any precedent claim(s), wherein the invoice is payed by a third party's application, asked by customer to become a payer (in part or in full) in the established payment transaction, from any location of customer's and/or third party's terminals, through online means, with automatic, instant, online notification of POP terminal for payment clearance.

6. A separate method or a method of any precedent claim(s), wherein the invoice registered at one POP terminal of a store is payed by a third party / charged to a third party's card (through application) with authorization wittingly given by third party for each invoice payment, therefore excluding the need to insert card data of a third party into customer's application and hence assuming risks of unauthorised payments executed by owner of the application and not by the owner of the card, excluding the usage of a third party's card in the store, and avoiding inherent violation of the law / card network rules, regarding card or card information transmittal to other persons.

7. A separate method or a method of any precedent claim(s), wherein a POP terminal of a store is automatically and instantly notified, online and from a distance, by payer's application and/or subsequent module of the application (ex: payment server), using only software and internet connection with no need for other peripheral devices, about the payment status (processed by a payment server) of the active invoice, in order to get payment clearance.
